# EUROPEAN PATENT APPLICATION

(11) **EP 4 040 833 A1**
(43) Date of publication of application: **10.08.2022**
(21) Application number: 19948126.8
(22) Date of filing: 02.10.2019
(51) Int. Cl.: H04W 16/28, H04W 24/10, H04W 72/12

(54) **TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2019/039006
(87) International publication number: WO 2021/064921

(57) **Abstract**

A terminal according to one aspect of the present disclosure includes a transmitting section that transmits first information to notify occurrence of beam failure and second information related to at least one of a cell with the beam failure detected and a new candidate beam, and a control section that performs, when transmission of the second information is performed after the first information is triggered, at least one of cancellation of the triggered first information and stopping of a timer started based on transmission of the first information.

## Description

### Technical Field

The present disclosure relates to a terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (LTE Rel. 8 to Rel. 14), monitoring of radio link quality (Radio Link Monitoring (RLM)) is performed. When Radio link failure (RLF) is detected in the RLM, a user terminal (User Equipment (UE)) is requested for RRC (Radio Resource Control) connection re-establishment.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (e.g., NR), performing procedure for switching to another beam in response to beam failure (BF) detection (which may be referred to as beam failure recovery (BFR) procedure, BFR, and so on) is under study. In the BFR procedure, when beam failure occurs, a UE reports a beam failure recovery request (BFRQ) for requesting recovery from the beam failure.

In the BFR procedure, the UE that reports notification of beam failure detection, information related to a cell in which the beam failure occurs, or information related to fresh candidate beams (also referred to as new candidate beams) by using one or more steps is also under study.

However, in the BFR procedure, how to control a reporting operation using the one or more steps has not been fully studied. Performing the BFR procedure inappropriately may cause reduced system performance, such as delay in BFR and the like.

Thus, an object of the present disclosure is to provide a terminal and a radio communication method that perform BFR procedure appropriately.

### Solution to Problem

A terminal according to one aspect of the present disclosure includes a transmitting section that transmits first information to notify occurrence of beam failure and second information related to at least one of a cell with the beam failure detected and a new candidate beam, and a control section that performs, when transmission of the second information is performed after the first information is triggered, at least one of cancellation of the triggered first information and stopping of a timer started based on transmission of the first information.

### Advantageous Effects of Invention

According to one aspect of the present disclosure, it is possible to perform BFR procedure appropriately.

### Brief Description of Drawings

FIG. 1 is a diagram to show an example of BFR procedure in Rel. 15 NR;
FIG. 2 is a diagram to show an example of new BFR procedure;
FIGS. 3A and 3B are diagrams to show an example of control of transmission of an SR for BFR according to a first aspect;
FIGS. 4A and 4B are diagrams to show an example of control of transmission of an SR for BFR according to a second aspect;
FIGS. 5A and 5B are diagrams to show an example of control of transmission of an SR for BFR according to a third aspect;
FIG. 6 is a diagram to show an example of a schematic structure of a radio communication system according to one embodiment;
FIG. 7 is a diagram to show an example of a structure of a base station according to one embodiment;
FIG. 8 is a diagram to show an example of a structure of a user terminal according to one embodiment; and
FIG. 9 is a diagram to show an example of a hardware structure of the base station and the user terminal according to one embodiment.

### Description of Embodiments

### <Beam Failure Recovery>

For NR, performing communication by using beam forming is under study. For example, a UE and base station (e.g., gNodeB (gNB)) may use a beam used for signal transmission (also referred to as a transmit beam, Tx beam, and so on) and a beam used for signal reception (also referred to as a receive beam, Rx beam, and so on).

In a case of using beam forming, the UE and base station are easily affected by disturbance due to an obstruction, and thus deterioration of radio link quality is assumed. Due to deterioration of the radio link quality, radio link failure (RLF) may occur frequently. When the RLF occurs, a cell is required to be reconnected, and thus frequent occurrence of the RLF causes deterioration of system throughput.

For NR, in order to suppress occurrence of the RLF, performing procedure for switching to another beam (which may be referred to as beam recovery (BR), beam failure recovery (BFR), L1/L2 (Layer 1/Layer 2) beam recovery, and so on) when quality of a specific beam deteriorates is under study. Note that the BFR procedure may be simply referred to as BFR.

Note that beam failure (BF) in the present disclosure may be referred to as link failure or radio link failure (RLF).

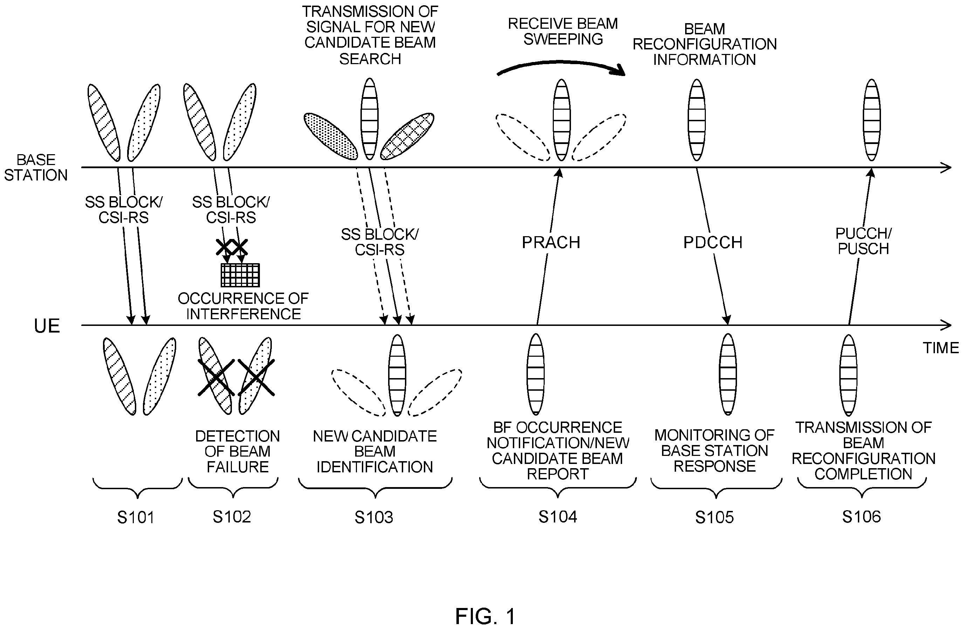

FIG. 1 is a diagram to show an example of the procedure for beam recovery in Rel. 15 NR. The number of beams and the like are an example, and are not limited to this. In an initial state (step S101) of FIG. 1, the UE performs measurement based on reference signal (RS) resources transmitted with use of two beams.

The RS may be at least one of a synchronization signal block (SSB) and a channel state measurement RS (Channel State Information RS (CSI-RS)). Note that the SSB may be referred to as an SS/PBCH (Physical Broadcast Channel) block and so on.

The RS may be at least one of a primary synchronization signal (Primary SS (PSS)), a secondary synchronization signal (Secondary SS (SSS)), a mobility reference signal (Mobility RS (MRS)), a signal included in the SSB, the SSB, the CSI-RS, a demodulation reference signal (DMRS), a beam-specific signal, and the like, or may be a signal constituted by expanding or changing these signals. The RS measured at step S101 may be referred to as an RS for beam failure detection (Beam Failure Detection RS (BFD-RS)) and so on.

At step S102, due to disturbance of a radio wave from the base station, the UE fails to detect the BFD-RS (or quality of reception of the RS deteriorates). Such disturbance may occur due to, for example, influence of an obstruction, phasing, interference, and the like between the UE and base station.

The UE detects beam failure when a certain condition is satisfied. For example, the UE may detect occurrence of the beam failure when a block error rate (BLER) with respect to all of configured BFD-RSs (BFD-RS resource configurations) is less than a threshold. When occurrence of the beam failure is detected, a lower layer (physical (PHY) layer) of the UE may notify (indicate) a higher layer (MAC layer) of a beam failure instance.

Note that standards (criteria) for the judgment are not limited to the BLER, and may be reference signal received power in the physical layer (Layer 1 Reference Signal Received Power (L1-RSRP)). In place of the RS measurement or in addition to the RS measurement, beam failure detection may be performed based on a downlink control channel (Physical Downlink Control Channel (PDCCH)) and the like. The BFD-RS may be expected to be quasi-co-location (QCL) with a DMRS for a PDCCH monitored by the UE.

Here, QCL is an indicator indicating statistical properties of the channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception filter/parameter (Spatial Rx Filter/Parameter) or a spatial transmission filter/parameter (Spatial Tx (transmission) Filter/Parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element of the QCL) in the present disclosure may be interpreted as spatial QCL (sQCL).

Information related to the BFD-RS (e.g., indices, resources, numbers, the number of ports, precoding, and the like for the RS), information related to the beam failure detection (BFD) (e.g., the above-mentioned threshold), and the like may be configured (notified) for the UE with use of higher layer signaling or the like. The information related to the BFD-RS may be referred to as information related to resources for BFR and so on.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The MAC layer of the UE may start a certain timer (which may be referred to as a beam failure detection timer) when receiving beam failure instance notification from the PHY layer of the UE. The MAC layer of the UE may trigger BFR (e.g., start any one of random access procedures mentioned later) when receiving the beam failure instance notification a certain number of times (e.g., beamFailureInstanceMaxCount configured by RRC) or more until the timer expires.

When there is no notification from the UE (e.g., time without the notification exceeds certain time) or when receiving a certain signal (beam recovery request at step S104) from the UE, the base station may judge that the UE has detected beam failure.

At step S103, the UE starts a search for a new candidate beam used for new communication for beam recovery. The UE may select the new candidate beam corresponding to a certain RS by measuring the RS. The RS measured at step S103 may be referred to as an RS for new candidate beam identification (New Candidate Beam Identification RS (NCBI-RS)), a CBI-RS, a Candidate Beam RS (CB-RS), and so on. The NCBI-RS may be the same as the BFD-RS, or may be different from the BFD-RS. Note that the new candidate beam may be referred to as a candidate beam or a new beam.

The UE may determine a beam corresponding to an RS satisfying a certain condition as the new candidate beam. For example, the UE may determine the new candidate beam based on an RS with an L1-RSRP exceeding a threshold out of configured NCBI-RSs. Note that standards (criteria) for the judgment are not limited to the L1-RSRP. The UE may determine the new candidate beam by using at least one of an L1-RSRP, an L1-RSRQ, and an L1-SINR (signal-tonoise interference power ratio). The L1-RSRP related to an SSB may be referred to as an SS-RSRP. The L1-RSRP related to a CSI-RS may be referred to as a CSI-RSRP. Similarly, the L1-RSRQ related to an SSB may be referred to as an SS-RSRQ. The L1-RSRQ related to a CSI-RS may be referred to as a CSI-RSRQ. Similarly, the L1-SINR related to an SSB may be referred to as an SS-SINR. The L1-SINR related to a CSI-RS may be referred to as a CSI-SINR.

Information related to the NCBI-RS (e.g., resources, numbers, the number of ports, precoding, and the like for the RS), information related to new candidate beam identification (NCBI) (e.g., the above-mentioned threshold), and the like may be configured (notified) for the UE with use of higher layer signaling or the like. The information related to the NCBI-RS may be obtained based on information related to the BFD-RS. The information related to the NCBI-RS may be referred to as information related to resources for NCBI and so on.

Note that the BFD-RS, the NCBI-RS, and the like may be interpreted as a radio link monitoring reference signal (Radio Link Monitoring RS (RLM-RS)).

At step S104, the UE that has identified the new candidate beam transmits a beam recovery request (Beam Failure Recovery reQuest (BFRQ)). The beam recovery request may be referred to as a beam recovery request signal, a beam failure recovery request signal, and so on.

For example, the BFRQ may be transmitted with use of a random access channel (Physical Random Access Channel (PRACH)). The BFRQ may include information about the new candidate beam identified at step S103. Resources for the BFRQ may be associated with the new candidate beam. The information about the beam may be notified with use of a beam index (BI), a port index for a certain reference signal, a resource index (e.g., a CSI-RS resource indicator (CRI)), an SSB resource indicator (SSBRI), and the like.

For Rel. 15 NR, CB-BFR (Contention-Based BFR) being BFR based on contention type random access (RA) procedure and CF-BFR (Contention-Free BFR) being BFR based on non-contention type random access procedure are under study. In the CB-BFR and CF-BFR, the UE may transmit a preamble (also referred to as an RA preamble, a random access channel (Physical Random Access Channel (PRACH)), a RACH preamble, and so on) as the BFRQ by using PRACH resources.

At step S105, the base station that has detected the BFRQ transmits a response signal (which may be referred to as BFR response, gNB response, and so on) to the BFRQ from the UE. Reconfiguration information with respect to one or a plurality of beams (e.g., DL-RS resource configuration information) may be included in the response signal.

The response signal may be transmitted in, for example, a UEcommon search space for a PDCCH. The response signal may be notified with use of a PDCCH (DCI) having a cyclic redundancy check (CRC) scrambled by an identifier for the UE (e.g., a cellradio RNTI (C-RNTI)). The UE may judge, based on beam reconfiguration information, at least one of a transmit beam and a receive beam to be used.

The UE may monitor the response signal based on at least one of a control resource set (CORESET) for BFR and a search space set for BFR. For example, the UE may detect the DCI having the CRC scrambled by the C-RNTI in a BFR search space in a separately configured CORESET.

Regarding the CB-BFR, when the UE receives the PDCCH corresponding to the C-RNTI related to the UE itself, it may be judged that contention resolution has succeeded.

With respect to a process at step S105, a period for the UE to monitor response from the base station (e.g., gNB) to the BFRQ may be configured. The period may be referred to as, for example, a gNB response window, a gNB window, a beam recovery request response window, a BFRQ response window, and so on. The UE may perform retransmission of the BFRQ when there is no gNB response detected in the window period.

At step S106, the UE may transmit, to the base station, a message indicating that beam reconfiguration has been completed. For example, the message may be transmitted by a PUCCH, or may be transmitted by a PUSCH.

At step S106, the UE may receive RRC signaling indicating a Transmission Configuration Indication state (TCI state) configuration used for the PDCCH, or may receive a MAC CE indicating activation of the configuration.

Beam recovery success (BR success) may represent, for example, a case where step S106 has been achieved. On the other hand, beam recovery failure (BR failure) may correspond to, for example, the case that BFRQ transmission has reached a certain number of times or the case that a beam failure recovery timer (Beam-failurerecovery-Timer) has expired.

Note that numbers for these steps are just numbers for explanation, and a plurality of steps may be organized, or the order of these steps may be changed. Whether BFR is performed may be configured for the UE with use of higher layer signaling.

Incidentally, for future radio communication systems (e.g., Rel. 16 (or later versions)), performing notification of occurrence of beam failure and a report on information related to a cell (or a CC) with the beam failure detected or on information related to a new candidate beam by using an uplink control channel (PUCCH) and a MAC control information (MAC CE) when the beam failure is detected is under study.

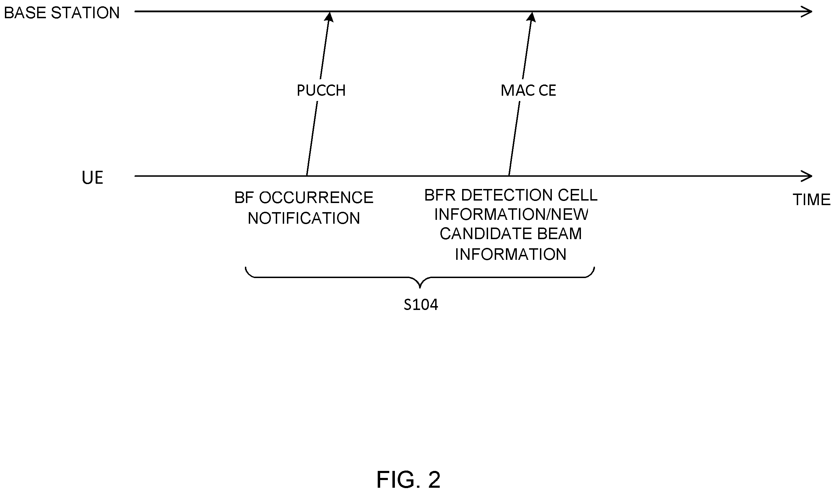

For example, it is conceivable that after detecting beam failure, the UE performs notification of occurrence of the beam failure and a report on information related to a cell with the beam failure detected or on information related to a new candidate beam by using one or more steps (e.g., 2 steps) (see FIG. 2). Note that the reporting operation is not limited to the 2 steps.

An uplink control channel is allowed to configure resources more flexibly in time domain as compared to a PRACH. Therefore, using the uplink control channel (PUCCH) as a channel used for BFRQ transmission is effective. A MAC CE (PUSCH) is allowed to configure resources more flexibly in time domain as compared to a PRACH. Therefore, using the MAC CE (PUSCH) as the channel used for BFRQ transmission is also conceivable.

In FIG. 2, the UE notifies occurrence of beam failure by using an uplink control channel (PUCCH) at a first step (or step 1). It is assumed that the UE reports at least one of information related to a cell with the beam failure detected and information related to a new candidate beam by using a MAC control information (e.g., a MAC CE or a MAC PDU including the MAC CE) at a second step (or step 1).

The PUCCH at the first step that uses, for example, a method (dedicated SR-like PUCCH) similar to transmission of a scheduling request (SR) is under study. The MAC CE (or the MAC PDU) at the second step may be transmitted with use of an uplink shared channel (PUSCH).

### <Scheduling Request>

In NR, the base station allocates the UE an uplink resource in response to a request (scheduling request (SR)) from the UE. Note that the uplink resource may be rephrased as a resource for a logical uplink channel (e.g., an uplink shared channel (UL-SCH)) (UL-SCH resource), a resource for a physical uplink channel (e.g., a physical uplink shared channel), or the like.

The UE may transmit the SR by using an uplink control channel (e.g., a PUCCH). A format for the PUCCH used for transmission of the SR may be, for example, PUCCH format (PF) 0 or 1. PF 0 may be constituted by 1 or 2 symbols. On the other hand, PF 1 may be constituted by 4 or more symbols.

A certain period (also referred to as a transmission occasion, an SR transmission occasion, an SR occasion, a transmission period, an instance, and so on) for the SR transmission using the PUCCH may be configured with certain periodicity. The SR occasion may be UE-specifically configured.

0 or one or more configurations for the SR (e.g., SR configurations) may be configured for the UE (or a Medium Access Control (MAC) entity for the UE). One SR configuration may constitute one or more sets of resources for SR transmission (SR resources) (or may be associated with the set). The SR resources may be configured across at least one of one or more bandwidth parts (BWPs) and one or more cells (also referred to as serving cells, component carriers (CCs), carriers, and so on). At most one SR resource for one logical channel may be configured for each BWP.

Each SR configuration may correspond to one or more logical channels (LCHs). Each LCH may be mapped to 0 or one SR configuration. The SR configuration may be configured for the UE by higher layer signaling (e.g., Radio Resource Control (RRC) signaling). Each LCH may have a value for priority. Note that in the present disclosure, the SR configuration may be simply referred to as an SR.

The UE may receive information (SR configuration set information) related to one or more sets of SR configurations. The SR configuration set information may be, for example, an RRC control element (Information Element (IE)) "SchedulingRequestConfig." The SR configuration set information may be configured for each cell group, and may be included in, for example, an RRC IE "MAC-CellGroupConfig." The SR configuration set information may be configured as a MAC parameter. Note that the RRC IE may be referred to as an RRC parameter, a higher layer parameter, or the like.

Each piece of the SR configuration information (e.g., an RRC IE "SchedulingRequestToAddMod") may include at least one of the following parameters.
- An identifier for the SR configuration information (or SR configuration) (an SR-ID, for example, an RRC IE "schedulingRequestId"),
- a timer for SR transmission on the PUCCH (e.g., an RRC IE "sr-ProhibitTimer"), and
- a maximum number of SR transmissions (e.g., an RRC IE "sr-TransMax").

An SR-ID in each piece of the SR configuration information may be used for identification of an SR instance (SR configuration) in the MAC layer. The SR-ID may be included in configuration information for the LCH (LCH configuration information, for example, an RRC IE "LogicalChannelConfig"). That is, the SR-ID may be used as an identifier for the SR configuration associated with the LCH.

The UE may receive information (SR resource information) related to SR resources associated with each SR configuration. The SR resource information may be, for example, an RRC IE "SchedulingRequestResourceConfig."

The SR resource information may be configured as a UE-specific PUCCH parameter. The SR resource information may be included in configuration information for the PUCCH for each BWP (PUCCH configuration information, for example, an RRC IE "PUCCH-Config"). The PUCCH configuration information may include one or more lists of SR resource information (e.g., an RRC IE "schedulingRequestResourceToAddModList").

The SR resource information may include, for example, at least one of the following parameters.
- An identifier for the SR resource information (an SR resource ID, for example, an RRC IE "schedulingRequestResourceId"),
- an identifier for the SR configuration information (or SR configuration) using the SR resource (an SR-ID, for example, an RRC IE "schedulingRequestID"),
- information (periodicity/offset information, for example, an RRC IE "periodicityAndOffset") indicating at least one of periodicity and offset for the SR resource (also referred to as an SR occasion and so on), and
- an identifier for a PUCCH resource (a PUCCH resource ID, for example, an RRC IE "PUCCH-ResourceId").

An SR resource configured by the SR resource information may be associated with SR configuration information (or SR configuration) identified by the above-described SR-ID. Note that the SR resource may include at least one of the above-described SR occasion, PUCCH resource, and the like.

The periodicity may be, for example, 2 or 7 symbols or 1, 2, 4, 5, 8, 10, 16, 20, 40, 80, 160, 320, or 640 slots. A set of values capable of being taken for each piece of subcarrier spacing (SCS) may be determined for the periodicity.

The UE may transmit an SR in an SR occasion with certain periodicity determined based on the above-described periodicity/offset information by using a PUCCH resource indicated by the above-described PUCCH resource ID. The UE may control transmission of the SR based on SR configuration information indicated by the above-described SR-ID.

The UE may transmit first information to notify occurrence of beam failure by using the SR in the BFR procedure. The SR used for the notification of occurrence of beam failure may be referred to as an SR for BFR, an SR for SCell BFR, dedicated SR for SCell, or dedicated SR.

However, when a scheduling request (e.g., an SR for BFR) is used for notification of occurrence of beam failure, how to control transmission of the SR for BFR becomes an issue.

For example, when a MAC PDU (or a PUSCH) including a BFR MAC CE is transmitted before a triggered SR for BFR is transmitted, how to control the triggered SR for BFR (pending SR for BFR) becomes an issue. Alternatively, when a certain timer is configured based on transmission of the SR for BFR, how to control the certain timer in a case where a MAC PDU (or a PUSCH) including a BFR MAC CE is transmitted becomes an issue.

The inventors of the present invention studied transmission control in a case where a scheduling request (e.g., an SR for BFR) is used for notification of occurrence of beam failure, and came up with the idea of one aspect of the present invention.

Hereinafter, embodiments according to the present disclosure will be described in detail with reference to the drawings. Respective aspects below may each be employed individually, or may be employed in combination. Note that in descriptions below n, with respect to operations without a particular explanation of a normal SR, operations related to an SR for existing systems (e.g., Rel. 15) may be employed.

### (First Aspect)

In a first aspect, an example of a UE operation in a case where first information to notify occurrence of beam failure and second information related to at least one of a cell with the beam failure detected and a new candidate beam are transmitted will be described. Specifically, when transmission of the second information is performed after the first information is triggered, at least one of the triggered first information and a timer configured based on transmission of the first information is canceled.

Descriptions below describes using, as an example, a case where an SR for BFR (or dedicated SR) is used for transmission of the first information and a BFR MAC CE (or a MAC PDU including a BFR MAC CE) is used for transmission of the second information. The SR for BFR may be transmitted by a PUCCH, and the MAC PDU may be transmitted by a PUSCH. Of course, signals or channels used for transmission of the first information and the second information are not limited to this.

A network may schedule a PUSCH (e.g., a PUSCH used for transmission of the BFR MAC CE) based on the SR for BFR transmitted from the UE. The UE may transmit the BFR MAC CE by using the PUSCH scheduled based on the SR for BFR, or may transmit the BFR MAC CE by using other PUSCH. The other PUSCH may be a PUSCH scheduled without basis of the SR for BFR, or may be a configuration grant-based PUSCH.

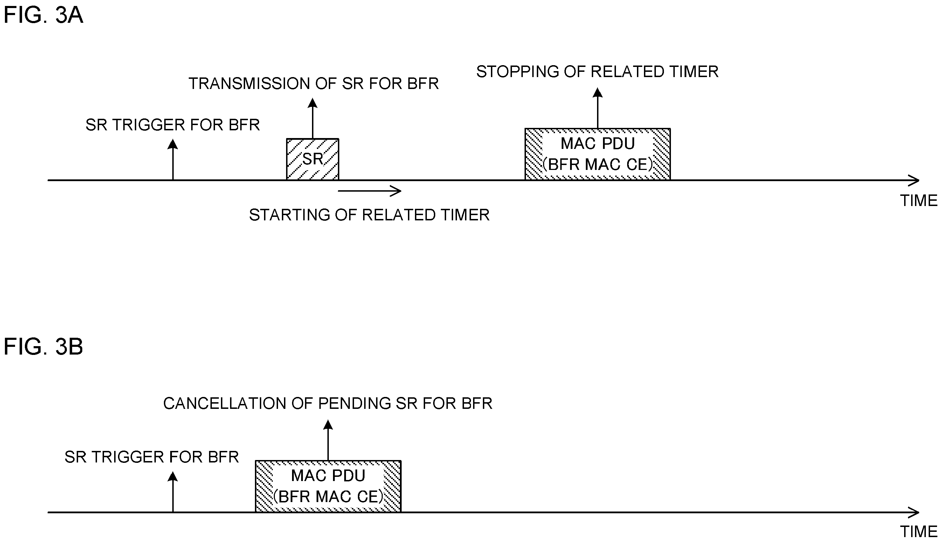

When an SR for BFR is triggered and a MAC PDU is transmitted, the UE may cancel an SR for BFR triggered before the MAC PDU (or a pending SR for BFR (see FIG. 3B). When an SR for BFR is triggered and a MAC PDU is transmitted, as long as a timer related to the SR for BFR is working (or running), the UE may stop the timer (see FIG. 3A).

The MAC PDU may have a structure including at least a BFR MAC CE and not including a BSR. Resources for the SR for BFR may use resources configured for an SR used for another purpose (e.g., transmission of another piece of information such as a buffer status report (BSR)). Alternatively, the resources for the SR for BFR may be configured separately from the resources configured for the SR used for another purpose.

FIG. 3A shows a case where, after an SR for BFR is triggered, the SR for BFR is transmitted based on the trigger, and a MAC PDU including a BFR MAC CE is transmitted after the transmission of the SR for BFR.

The UE may trigger the SR for BFR when a certain condition is satisfied. The certain condition may be occurrence of BFR (e.g., a case where transmit power for a reference signal is less than a threshold and the like). The trigger for the SR for BFR may be controlled regardless of the presence or absence of a trigger for an SR (also referred to as a normal SR) used for another purpose (e.g., transmission of another piece of information such as a BSR). The UE may judge that the triggered SR for BFR is in a pending state until canceled.

When transmitting an SR for BFR, the UE may start (or launch) the related timer based on the transmission of the SR for BFR. Transmission of the SR for BFR may be prohibited when the timer related to the SR for BFR is working (or running). The timer related to the SR for BFR may be referred to as a new timer, sr-ProhibitTimer, or sr-ProhibitTimer for BFR.

The UE may control so as to stop the timer related to the SR for BFR when transmitting the MAC PDU including the BFR MAC CE. When the MAC PDU including the BFR MAC CE is transmitted, there is no need to perform transmission of the SR for BFR, and thus stopping the related timer reduces unnecessary operations, thereby allowing the UE operation to be simplified.

FIG. 3B shows a case where a MAC PDU including a BFR MAC CE is transmitted before transmission of an SR for BFR when the SR for BFR is triggered.

When transmitting the MAC PDU including the BFR MAC CE, the UE may control so as to cancel a pending SR for BFR triggered before the transmission of the MAC PDU.

When the MAC PDU (second information) including the BFR MAC CE is transmitted, there is no need to perform transmission of the SR for BFR (first information), and thus canceling the SR for BFR (or triggered SR for BFR) reduces unnecessary operations, thereby allowing the UE operation to be simplified.

### <Variation>

FIG. 3B shows a case where the pending SR for BFR (or triggered SR for BFR) is canceled when the MAC PDU including the BFR MAC CE is transmitted before transmission of the SR for BFR, but a timing of the cancellation is not limited to this.

For example, even when transmitting the MAC PDU, the UE may control so as not to cancel the pending SR for BFR (or triggered SR for BFR) until at least one of the following condition 1 and condition 2 is satisfied.

Condition 1: until it is judged that reception of the MAC PDU has succeeded in the network (e.g., the base station) and
Condition 2: until a transmission configuration indication (TCI) state is changed (or updated or activated) in a cell with the beam failure occurred.

The UE may judge that reception of the MAC PDU has succeeded in the base station when, after a MAC PDU including a MAC CE for BFR is transmitted, retransmission of a PUSCH for the transmission of the MAC CE for BFR is not triggered or scheduled.

That is, when the MAC PDU is transmitted and at least one of the condition 1 and the condition 2 is satisfied, the UE may control so as to cancel the pending SR for BFR (or triggered SR for BFR).

Therefore, when reception of the MAC PDU including the MAC CE for BFR has failed in the base station, transmission of the SR for BFR can be continually performed, and thus a delay in the BFR procedure can be suppressed.

Note that the UE may control so as to stop the timer related to the SR for BFR when the MAC PDU is transmitted and at least one of the condition 1 and the condition 2 is satisfied.

Alternatively, the UE may control the timer related to the SR for BFR so as not to stop before the timer expires.

### (Second Aspect)

In a second aspect, an example of control of transmission of first information (hereinafter described as an SR for BFR) used for notification of occurrence of beam failure and an SR (hereinafter described as a normal SR) used for another purpose will be described. Specifically, when transmission of a MAC CE (or a MAC PDU including the MAC CE) including certain information is performed after the SR for BFR and the normal SR are triggered, at least one of a trigger and a timer for a certain SR is canceled.

Descriptions below describe using, as an example, a case where the SR for BFR is used for notification of occurrence of beam failure or a request for PUSCH resources for transmission of second information (BFR MAC CE) and the normal SR is used for a request for PUSCH resources for BSR transmission. Of course, a purpose of the normal SR is not limited to the BSR.

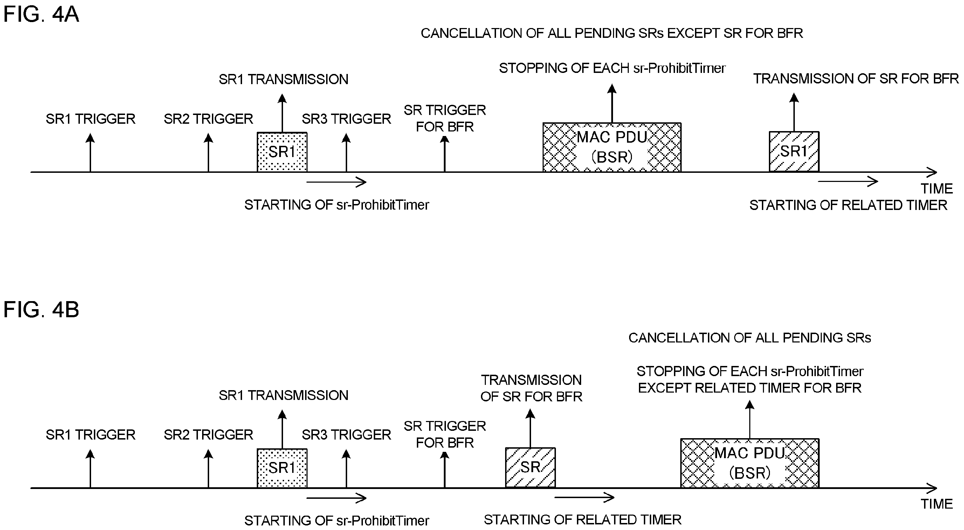

When one or more normal SRs and an SR for BFR are triggered and a MAC PDU including a BSR is transmitted, the UE may cancel a normal SR triggered before the MAC PDU (or a pending normal SR) (see FIG. 4). When one or more normal SRs and an SR for BFR are triggered and a MAC PDU including a BSR is transmitted, as long as a timer related to the normal SR (e.g., sr-ProhibitTimer) is working (or running), the UE may stop the timer (see FIG. 4).

FIG. 4 shows a case where the MAC PDU includes at least a buffer status report (BSR) and does not include the BFR MAC CE. The MAC PDU may have a structure including a BSR MAC CE including a buffer state until the last event that has triggered the BSR with the normal SR. The BSR MAC CE may be a long BSR MAC CE and a short BSR MAC CE. In the present description, the BSR may be interpreted as a BSR MAC CE.

FIG. 4A shows a case where normal SR 1, SR 2, and SR 3 and SR for BFR are triggered before transmission of the MAC PDU including the BSR, and the normal SR 1 is transmitted based on the trigger for the normal SR 1. That is, FIG. 4A shows a case where the MAC PDU including the BSR is transmitted before the normal SR 2 and SR 3 and SR for BFR are transmitted. The UE may judge that the triggered normal SRs and SR for BFR are in a pending state until canceled.

When transmitting the normal SR 1, the UE may start a related timer (e.g., sr-ProhibitTimer) based on the transmission of the normal SR 1.

When transmitting the MAC PDU including the BSR, the UE may control so as to cancel the pending normal SRs (here, the normal SR 2 and SR 3) triggered before the transmission of the MAC PDU. On the other hand, the UE may control so as not to cancel the pending SR for BFR triggered before the transmission of the MAC PDU. For example, the UE may transmit an SR for BSR based on the SR for BSR triggered after the MAC PDU including the BSR is transmitted.

When transmitting the MAC PDU including the BSR, the UE may also control so as to stop a running timer for normal SR (here, a timer corresponding to SR 1).

As described above, when the MAC CE including the BSR is transmitted, controlling so as to cancel the triggered pending normal SRs other than the SR for BFR can suppress influence on BFR operations (e.g., cancellation of transmission of the SR for BFR) due to another operation.

FIG. 4B shows a case where normal SR 1, SR 2, and SR 3 and SR for BFR are triggered before transmission of a MAC PDU including a BSR, and the normal SR 1 based on the trigger for the normal SR 1 and the SR for BFR based on the trigger for BFR are transmitted. That is, FIG. 4B shows a case where the MAC PDU including the BSR is transmitted before the normal SR 2 and SR 3 are transmitted.

When transmitting the normal SR 1, the UE may start a related timer (e.g., sr-ProhibitTimer) based on the transmission of the normal SR 1. Similarly, when transmitting the SR for BFR, the UE may start the related timer based on the transmission of the SR for BFR.

When transmitting the MAC PDU including the BSR, the UE may control so as to cancel the pending normal SRs (here, the normal SR 2 and SR 3) triggered before the transmission of the MAC PDU.

When transmitting the MAC PDU including the BSR, the UE may also control so as to stop a running timer for normal SR (here, a timer corresponding to SR 1). On the other hand, the UE may control so as not to stop a running timer related to the SR for BFR.

As described above, when the MAC CE including the BSR is transmitted, controlling so as to stop the timer for the normal SRs other than the SR for BFR can suppress influence on BFR operations (e.g., cancellation of transmission of the SR for BFR) due to another operation.

### <Variation>

The above-described descriptions show a case where at least one of the triggered SR for BFR (pending SR for BFR) and the timer related to the SR for BFR is controlled regardless of (without being influenced by) transmission of the MAC PDU including the BSR, but are not limited to this.

For example, at least one of the triggered normal SR (pending normal SR) and the timer related to the normal SR may be controlled regardless of (without being influenced by) transmission of the MAC PDU including the BFR MAC CE. That is, when the MAC PDU including the BFR MAC CE (MAC PDU not including a BSR) is transmitted after the normal SR is triggered, controlling so as to cancel (or stop) the pending SR for BFR (or related timer) and so as not to cancel the normal SR may be allowed.

Alternatively, controlling so as to cancel or stop at least one of the triggered SR for BFR (pending SR for BFR) and the timer related to the SR for BFR when the MAC PDU including the BSR is transmitted similarly to the normal SR may be allowed. In this case, when resources or capacity for a PUSCH scheduled or triggered by transmission of the normal SR is enough, the UE may transmit the BFR MAC CE (or MAC PDU including the BFR MAC CE) by using the PUSCH.

### (Third Aspect)

In a third aspect, another example of control of transmission of first information (hereinafter described as an SR for BFR) used for notification of occurrence of beam failure and an SR (hereinafter described as a normal SR) used for another purpose will be described. Specifically, when transmission of a MAC PDU including a BFR MAC CE and a BSR is performed after the SR for BFR and the normal SR are triggered, at least one of a trigger and a timer for a certain SR is canceled.

Descriptions below describe using, as an example, a case where the SR for BFR is used for notification of occurrence of beam failure or a request for PUSCH resources for transmission of second information (BFR MAC CE) and the normal SR is used for a request for PUSCH resources for BSR transmission. Of course, a purpose of the normal SR is not limited to the BSR.

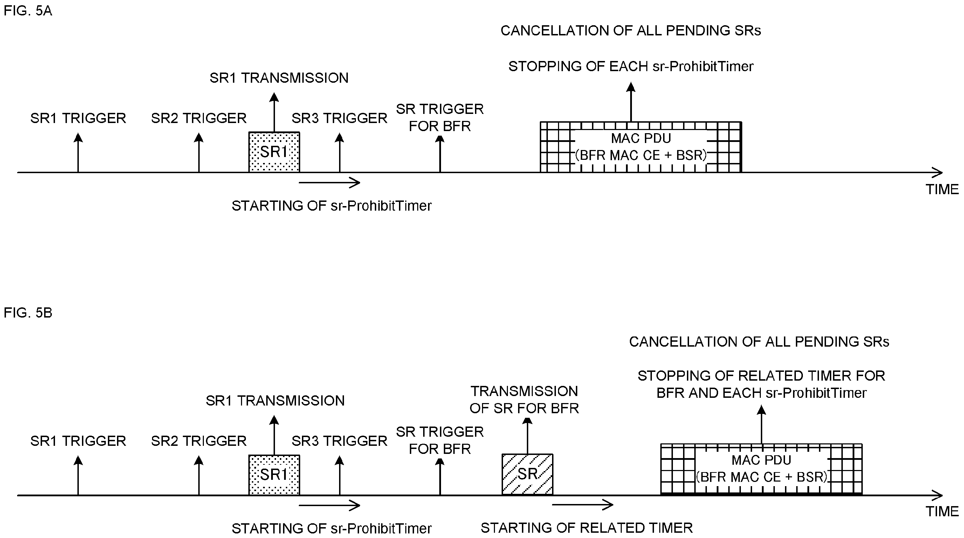

Assume a case where one or more normal SRs and an SR for BFR are triggered, and a MAC PDU including a BFR MAC CE and a BSR are transmitted. In such a case, the UE may cancel a normal SR (e.g., a pending normal SR) and an SR for BFR (e.g., a pending SR for BFR) triggered before the MAC PDU (see FIG. 5). As long as at least one of a timer related to the normal SR (e.g., sr-ProhibitTimer) and a timer related to the SR for BFR is working (or running), the UE may stop the timer (see FIG. 5).

FIG. 5A shows a case where normal SR 1, SR 2, and SR 3 and SR for BFR are triggered before transmission of the MAC PDU including the BFR MAC CE and the BSR, and the normal SR 1 is transmitted based on the trigger for the normal SR 1. That is, FIG. 5A shows a case where the MAC PDU is transmitted before the normal SR 2 and SR 3 and SR for BFR are transmitted. The UE may judge that the triggered normal SRs and SR for BFR are in a pending state until canceled.

When transmitting the MAC PDU including the BFR MAC CE and the BSR, the UE may control so as to cancel the pending SRs (here, the normal SR 2 and SR 3 and the SR for BFR) triggered before the transmission of the MAC PDU.

When transmitting the MAC PDU including the BFR MAC CE and the BSR, the UE may also control so as to stop a running timer for SR (here, a timer corresponding to SR 1).

When the MAC PDU including the BFR MAC CE and the BSR are transmitted, there is no need to perform transmission of the SR for BFR and normal SRs, and thus canceling the pending SR for BFR and pending normal SRs reduces unnecessary operations, thereby allowing the UE operation to be simplified.

FIG. 5B shows a case where normal SR 1, SR 2, and SR 3 and SR for BFR are triggered before transmission of the MAC PDU including the BFR MAC CE and the BSR, and the normal SR 1 and the SR for BFR are transmitted. That is, FIG. 5B shows a case where the MAC PDU is transmitted before the normal SR 2 and SR 3 are transmitted.

When transmitting the normal SR 1, the UE may start a related timer (e.g., sr-ProhibitTimer) based on the transmission of the normal SR 1. Similarly, when transmitting the SR for BFR, the UE may start the related timer based on the transmission of the SR for BFR.

When transmitting the MAC PDU, the UE may control so as to cancel the pending SRs (here, the normal SR 2 and SR 3) triggered before the transmission of the MAC PDU.

When transmitting the MAC PDU, the UE may also control so as to stop a running timer (here, a timer related to SR 1 and a timer related to the SR for BFR).

When the MAC PDU including the BFR MAC CE and the BSR are transmitted, there is no need to perform transmission of the SR for BFR and normal SRs, and thus stopping the related timer reduces unnecessary operations, thereby allowing the UE operation to be simplified.

### <Variation>

FIG. 5 shows a case where the pending SR for BFR (or triggered SR for BFR) is canceled when the MAC PDU is transmitted before transmission of the SR for BFR, but a timing of the cancellation is not limited to this.

For example, even when transmitting the MAC PDU, the UE may control so as not to cancel the pending SR for BFR (or triggered SR for BFR) until at least one of the following condition 1 and condition 2 is satisfied.

Condition 1: until it is judged that reception of the MAC PDU has succeeded in the network (e.g., the base station) and Condition 2: until a TCI state is changed (or updated or activated) in a cell with the beam failure occurred.

The UE may judge that reception of the MAC PDU has succeeded in the base station when, after a MAC PDU including a MAC CE for BFR and a BSR are transmitted, retransmission of a PUSCH for the transmission of the MAC CE for BFR is not triggered or scheduled.

That is, when the MAC PDU is transmitted and at least one of the condition 1 and the condition 2 is satisfied, the UE may control so as to cancel the pending SR for BFR (or triggered SR for BFR). In this case, a timing of cancellation of the SR for BFR may be different from that of the normal SR.

Therefore, when reception of the MAC PDU including the MAC CE for BFR has failed in the base station, transmission of the SR for BFR can be continually performed, and thus a delay in the BFR procedure can be suppressed.

Note that the UE may control so as to stop the timer related to the SR for BFR when the MAC PDU is transmitted and at least one of the condition 1 and the condition 2 is satisfied.

Alternatively, the UE may control the timer related to the SR for BFR so as not to stop before the timer expires.

The above-described descriptions show a case where both of the pending SR for BFR and the pending normal SRs are canceled after the MAC PDU including the MAC CE for BFR and the BSR are transmitted, but are not limited to this. For example, the UE may control so as to cancel either the pending SR for BFR or the pending normal SRs after transmission of the MAC PDU including the MAC CE for BFR and the BSR.

The UE may also control so as to stop either a timer related to the SR for BFR or a timer related to the normal SR after transmission of the MAC PDU including the BFR MAC CE and the BSR.

Note that a case where transmission of both of the BFR MAC CE and BSR fails due to small resources or capacity for a PUSCH scheduled by the network after transmission of the SR for BFR and the normal SR is assumed. In such a case, the UE may prioritize transmission of either of those (e.g., the BFR MAC CE). In such a case, the UE may control so as not to perform cancellation of an SR that has not performed transmission of a corresponding MAC PDU or stopping of a timer related to the SR.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

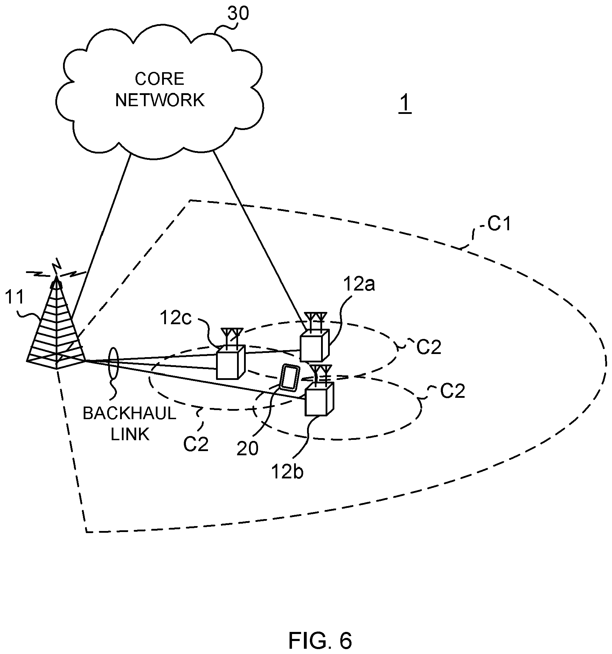

FIG. 6 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

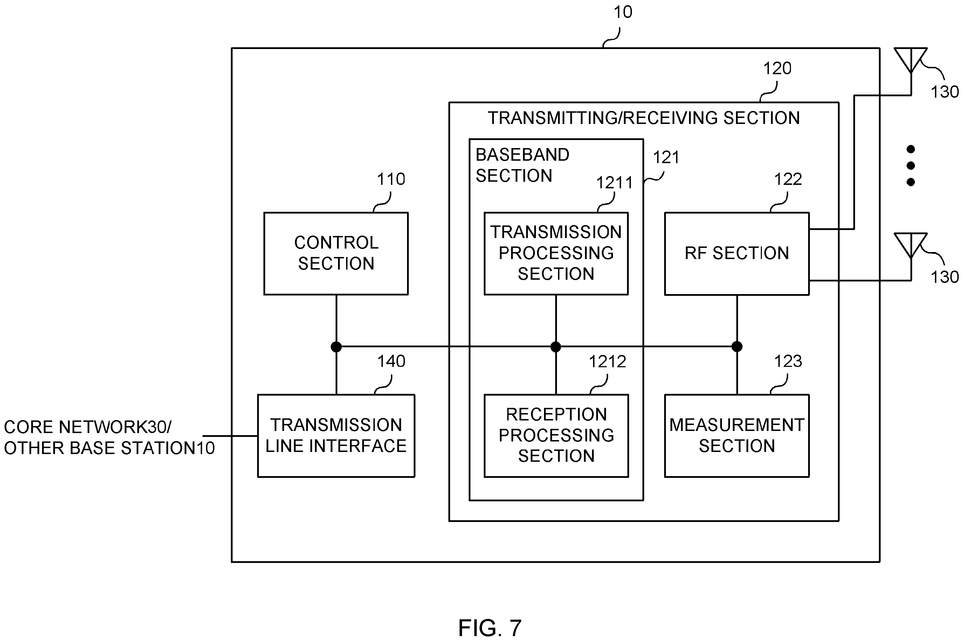

FIG. 7 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 receives first information (e.g., an SR for BFR) to notify occurrence of beam failure and second information (e.g., a BFR MAC CE) related to at least one of a cell with the beam failure detected and a new candidate beam.

When the second information is transmitted after the first information is triggered in the UE, the control section 110 may assume that at least one of cancellation of the triggered first information and stopping of a timer started based on transmission of the first information is performed.

### (User Terminal)

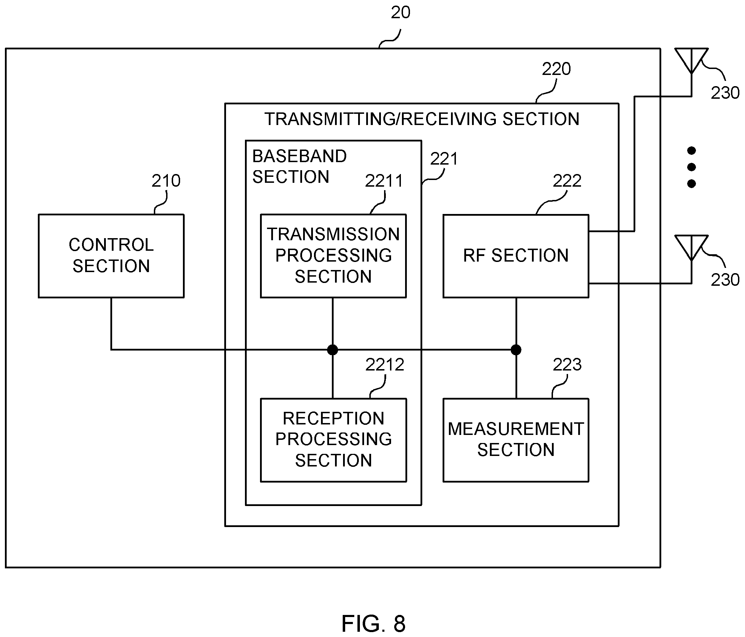

FIG. 8 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 transmits first information (e.g., an SR for BFR) to notify occurrence of beam failure and second information (e.g., a BFR MAC CE) related to at least one of a cell with the beam failure detected and a new candidate beam.

When transmission of the second information is performed after the first information is triggered, the control section 210 may control so as to perform at least one of cancellation of the triggered first information and stopping of a timer started based on transmission of the first information.

The control section 210 may control so as to cancel the triggered first information after at least one of success in transmission of the second information and change in a TCI state for a cell with the beam failure occurred.

Alternatively, in a case that the first information is transmitted with use of a scheduling request and that, after a first scheduling request corresponding to the first information and a second scheduling request corresponding to other information are triggered, MAC control information including the other information is transmitted, the control section 210 may control so as not to perform at least one of cancellation of the first scheduling request and stopping of a timer started based on transmission of the first scheduling request.

Alternatively, in a case that the first information is transmitted with use of a scheduling request and that, after a first scheduling request corresponding to the first information and a second scheduling request corresponding to other information are triggered, the first information and MAC control information including the other information are transmitted, the control section 210 may control so as to perform at least one of cancellation of the triggered first scheduling request and second scheduling request and stopping of a timer started based on transmission of the first scheduling request and a timer started based on transmission of the second scheduling request.

The control section 210 may control so as to cancel the triggered first scheduling request after at least one of success in transmission of the second information and change in a TCI state for a cell with the beam failure occurred.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

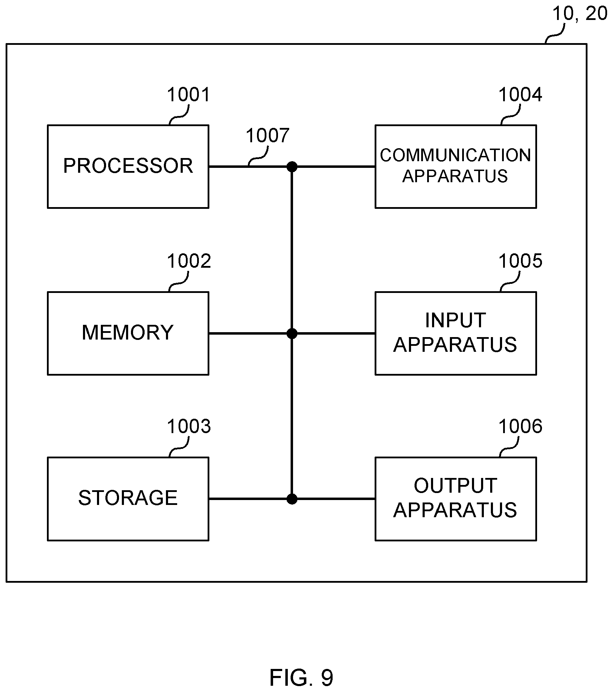

For example, a base station, a user terminal, and so on according to one embodiment of the present disclosure may function as a computer that executes the processes of the radio communication method of the present disclosure. FIG. 9 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-toterminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a transmitting section that transmits first information to notify occurrence of beam failure and second information related to at least one of a cell with the beam failure detected and a new candidate beam; and
a control section that performs, when transmission of the second information is performed after the first information is triggered, at least one of cancellation of the triggered first information and stopping of a timer started based on transmission of the first information.

2. The terminal according to claim 1, wherein
the control section cancels the triggered first information after at least one of success in the transmission of the second information and change in a transmission configuration indication (TCI) state for a cell with the beam failure occurred.

3. The terminal according to claim 1 or 2, wherein
in a case that the first information is transmitted with use of a scheduling request and that, after a first scheduling request corresponding to the first information and a second scheduling request corresponding to other information are triggered, MAC control information including the other information is transmitted, the control section controls so as not to perform at least one of cancellation of the first scheduling request and stopping of a timer started based on transmission of the first scheduling request.

4. The terminal according to claim 1 or 2, wherein
in a case that the first information is transmitted with use of a scheduling request and that, after a first scheduling request corresponding to the first information and a second scheduling request corresponding to other information are triggered, the first information and MAC control information including the other information are transmitted, the control section performs at least one of cancellation of the triggered first scheduling request and second scheduling request and stopping of a timer started based on transmission of the first scheduling request and a timer started based on transmission of the second scheduling request.

5. The terminal according to claim 4, wherein
the control section cancels the triggered first scheduling request after at least one of success in the transmission of the second information and change in a transmission configuration indication (TCI) state for a cell with the beam failure occurred.

6. A radio communication method comprising:
transmitting first information to notify occurrence of beam failure and second information related to at least one of a cell with the beam failure detected and a new candidate beam; and
performing, when transmission of the second information is performed after the first information is triggered, at least one of cancellation of the triggered first information and stopping of a timer started nbased on transmission of the first information.
